# EUROPEAN PATENT SPECIFICATION

(11) **EP 0 836 700 B1**
(45) Date of publication and mention of the grant of the patent: **23.05.2001**
(21) Application number: 96920972.5
(22) Date of filing: 21.06.1996
(51) Int. Cl.: F42B 39/14, F42B 39/20, F02K 9/38

(54) **IMPROVED SAFETY IN SOLID FUEL ROCKET MOTORS**
FESTBRENNSTOFFRACKETTENTRIEBWERK MIT VERBESSERTER SICHERHEIT
MOTEURS-FUSEES A COMBUSTIBLE SOLIDE A SECURITE AMELIOREE

(30) Priority: 04.07.1995 GB 9513561
(43) Date of publication of application: 22.04.1998
(73) Proprietor: Royal Ordnance plc, Euxton Chorley Lancashire PR7 6AD (GB)
(72) Inventor: CANNON, Bernard, Aelred, Worcestershire B97 5RP (GB)
(74) Representative: Wildman, David Brian
(86) International application number: GB9601525
(87) International publication number: WO9702464

(56) References cited:
- US-A- 3 887 991
- US-A- 5 155 298
- US-A- 5 311 820

## Description

The present invention relates to solid fuel propellant motors and in particular to means for reducing the hazard of unwanted ignition of such motors due to slow extraneous heating.

We refer to our copending patent application number PCT/GB96/00325 the content of which is included herein by reference. In particular, this reference describes a device to mitigate the effects of unwanted extraneous heating under so-called "slow cook-off" conditions.

Explosive materials can be broadly divided into those which are intended to detonate and those which are intended to ignite or burn, albeit very rapidly. The present invention is mainly concerned with the latter type of material, an example of which is propellant material used for applications such as rocket motors.

Propellant materials, based for example on nitrocellulose (NC) or mixtures of nitrocellulose and nitroglycerine (NG), when subjected to extraneous heating at a relatively rapid rate will generally react by producing an ignition event where the material burns rather than detonates. The temperature at which this ignition event occurs is dependent on the heating rate of the material. A typical ignition temperature range for propellants based on cast NC/NG matrices is about 160 to 180°C at, for example, a heating rate of 5°C per minute. However, although undesired ignition of a propellant motor is a serious and dangerous event, the potentially more dangerous event of explosive detonation may occur when the material is subjected to a very low heating rate. A heating rate of about 0.05°C per minute, for example, from ambient temperature may cause detonation at a temperature of about 120°C.

During a detonation event, substantially all molecules of the material release their chemical energy simultaneously. A slow heating rate serves to bring the majority or all of the molecules in the motor matrix to an energy level where the next increment of heat input takes the material above an activation energy "barrier" to promote a simultaneous reaction causing a detonation event.

Under conditions of low heating rate it is desirable to be able to stimulate an ignition at a lower energy level and cause the material to burn prior to detonation taking place. However, even the burning of a solid fuel propellant motor in a restricted environment is an extremely hazardous event. The rate of burning of a solid fuel propellant is very high and is dependent, inter alia, on the gas pressure and temperature conditions within the motor casing. Normally, a solid fuel motor may be fully consumed within a few seconds. However, if the same fuel is ignited under normal atmospheric pressure without the pressure being allowed to increase substantially, the rate of burning is very much slower, and consequently, much less hazardous.

EP-A-0334731 describes a device using a low melting point alloy effectively as an adhesive between two coaxial surfaces, one surface on a motor body and the other surface on a closure. On heating the low melting point alloy melts and allows ejection of the closure by springs acting in the axial direction. However, the low melting point alloy does not provide sufficient strength to retain the closure during normal firing operation of the motor. Consequently, an additional locking ring is needed that must be rotated into position prior to firing and thus adding unnecessary expense, complexity and potential unreliability to the device. Furthermore, the low melting point alloy must be cast in―situ thus further increasing cost and complexity of manufacture.

US-A-5311820 describes a device whereby a motor closure may be retained in a motor body. This device employs two sections of overlapping tube having aligned corresponding grooves on the outside of the inner tube and on the inside of the outer tube, there being an internal spring retainer provided to lock the two tube components together. The groove in the outer tube is sufficiently deep so as to completely accommodate the spring retainer and so not engage the groove in the inner tube. Grub screws are used to force the spring retainer into the inner groove, and so cause the two tubes to be locked together. One by one the grub screw are removed and molten low melting point alloy cast in the vacant holes and allowed to solidify. When all the grub screws have been replaced, the key is maintained in the engaged position only by the low melting point alloy. On extraneous heating the low melting point alloy melts and the spring retainer springs radially outwardly completely into the groove in the outer tube thus releasing the closure. This device has four major engineering disadvantages. The first is that the spring retainer ring is unlikely to move radially outwardly and submerge into the outer groove in a consistent and reliable manner such that a clean separation of the closure member is unlikely to occur. Secondly, the device increases the necessary outer diameter of the motor which is undesirable. Thirdly, the radial ejection of the low melting point alloy on melting means that the motor cannot be contained within a continuous outer skin or air frame. Fourthly, the necessity of sequentially removing grub screws and casting low melting point alloy into the holes is time consuming and adds to the cost of the device.

US5155298 describes a device for use in warheads wherein a closure plate is secured to the warhead casing by means of an expandable snap ring. The snap ring is held in an opened position by a portion of fusible material fixed between the two ends of the snap ring. The opened snap ring and fusible portion are together located in a single engagement means provided about the circumference of the closure/casing interface. When the fusible portion melts, the snap ring closes to a smaller radius providing clearance between the end closure plate and the warhead casing thus releasing the closure plate. This device is directed to use with explosive ordnance and not to use with pressure vessels having considerable axial thrust such as rocket motor casings. The mechanical and physical properties of this device render it unsuitable for use with rocket motor casings as the device would not provide adequate mechanical or structural stability for a rocket motor in normal use. The lack of physical and mechanical radial symmetry of the snap ring would cause a non-uniform response to axial thrust which could adversely affect the performance of the rocket motor in normal use. Furthermore, since the response of the ring on melting of the fusible portion is to close at the point where the fusible portion was located, the radius of the ring is unlikely to contract uniformly about the axial centre line of the casing and the ring would thus be prone to catching the casing at one end thereby inhibiting the release of the closure member.

US-A-5035181 is specifically for use for fuses on bombs and shells. The device described can only be used where the shock wave propagates faster than the speed of sound, and therefore, has no relevance to pressure vessels such as rocket motors bodies.

The object of the present invention is to provide a means of preventing a pressure build up within a solid fuel propellant motor casing in the event of unwanted ignition thereof and which does not have the disadvantages of the prior art devices and methods.

According to a first aspect of the present invention, there is provided a solid fuel propellant motor casing, the casing comprising a body portion for containing the propellant, the body portion also including at least one detachable closure portion, the closure portion being maintained in position relative to said body portion by retaining means, the retaining means being held in position with engagement means on an inner surface of said body portion and located radially with respect to said body portion by locating means against resilient biasing means, said locating means being responsive to temperature such that said locating means melt at a predetermined temperature allowing said retaining means to move radially inwardly of said body portion and allow said at least one closure portion to be ejected from the casing.

The at least one closure portion may be, for example, a rocket nozzle portion through which the propellant motor efflux passes under normal conditions of use. Alternatively, the at least one closure portion may be a forward portion of a missile vehicle, for example, comprising guidance electronics and/or a payload.

In the present invention, the locating means are intended to melt at a predetermined temperature which is below the detonation temperature of the propellant material and which is also, preferably, below the temperature at which an automatic ignition initiating device such as that described in our copending patent application, PCT/GB96/00325, referred to above is intended to operate. On melting of the locating means, the resiliently biased retaining means which hold the end closure in position are ejected by the resilient biasing means such that if unwanted ignition of the propellant occurs, the end closure is merely ejected due to a momentary pressure rise caused by the burning propellant. However, once the end closure is ejected it is not possible for the pressure in the casing to rise significantly and thus, the rate of burning of the propellant is consequently very low and much less hazardous.

Preferably, the retaining means are also provided with additional locating means such that under normal firing conditions of the motor, the axial thrust of the burning propellant on the at least one end closure serves to hold the retaining means in their intended positions. Under normal operating conditions where the motor is intentionally ignited, the time of burning of the motor is very short and there is insufficient time for the locating means to heat to a temperature at which they would melt. However, even if melting were to occur, the end closure would be held in position by the additional locating means.

The additional locating means may, for example, comprise co-operating groove and flange means provided in the body portion and retaining means, respectively.

The retaining means may comprise a ring dimensioned to co-operate with the body portion, the ring being split into two or more segments.

An important advantage of the present invention is that all components including the locating means of meltable material may be premachined prior to assembly allowing ease and economy of construction.

A further important advantage of the present invention is that no moving components are employed in normal use, thus ensuring reliability of operation.

The locating means may comprise pins, screws, wedges, rivets or any other suitable means and made of a material melting or beginning to melt a desired predetermined temperature. Such a material may comprise a metal or alloy made, for example, of one or more of tin, lead, bismuth, antimony, cadmium. Other metals may also be employed according to any specific requirements as would be understood by a person skilled in the art.

According to a second aspect of the present invention, there is provided a vehicle such as a rocket or missile having a casing according to the first aspect of the present invention.

In order that the present invention may be more fully understood, examples will now be described by way of illustration only with reference to the accompanying drawings, of which:
Figure 1 shows a schematic cross section through a vehicle having a motor casing indicating alternative embodiments according to the present invention;
Figure 2 shows a portion of a motor casing having a detachable nozzle portion;
Figure 3 shows the area "C" of Figure 2 in more detail;
Figure 4 shows an end view of retaining means shown in Figure 3;
Figure 5 shows a side view of the retaining means of Figure 4; and
Figure 6 which shows a cross section through Y-Y of Figure 4.

Referring now to the drawings and where the same features are denoted by common reference numerals.

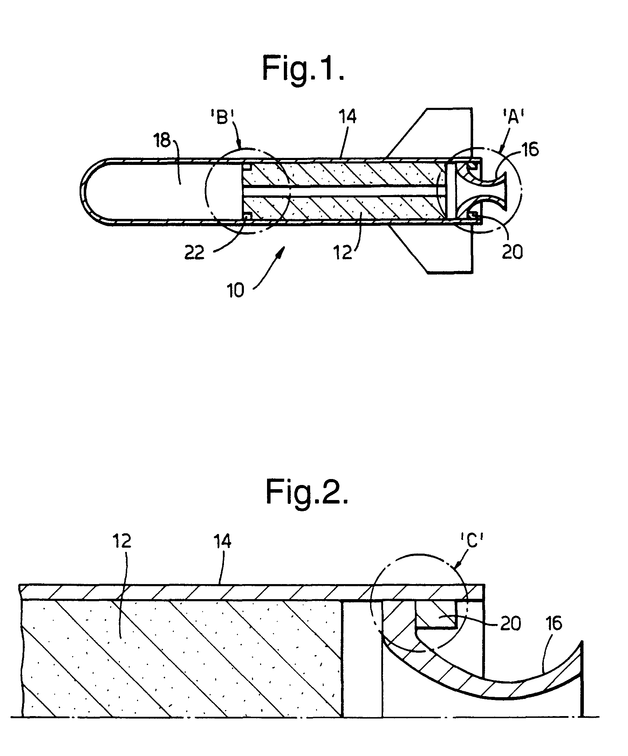

Figure 1 shows a schematic cross section through a vehicle 10 having a solid propellant motor 12. The vehicle 10 has a body portion 14 having a closure at one end comprising a nozzle 16 and a closure at the remote end comprising a section 18 having, for example, guidance means and/or a payload (not shown). The closures 16 and 18 are secured in place by means to be described below but shown generally as 20, 22, respectively in areas "A" and "B" of Figure 1. The motor casing or body portion 14 may employ means to allow ejection of either or both of the closures 16 and/or 18 in the event of unwanted extraneous slow heating thereof. Furthermore, the vehicle may also employ means to ignite the motor 12, prior to detonation, such as arc described in our copending patent application,
PCT/GB96/00325, referred to above. However, it is to be understood that the operation of such ignition means is effected at a temperature no lower than, or more preferably, greater than that described below with reference to the present invention.

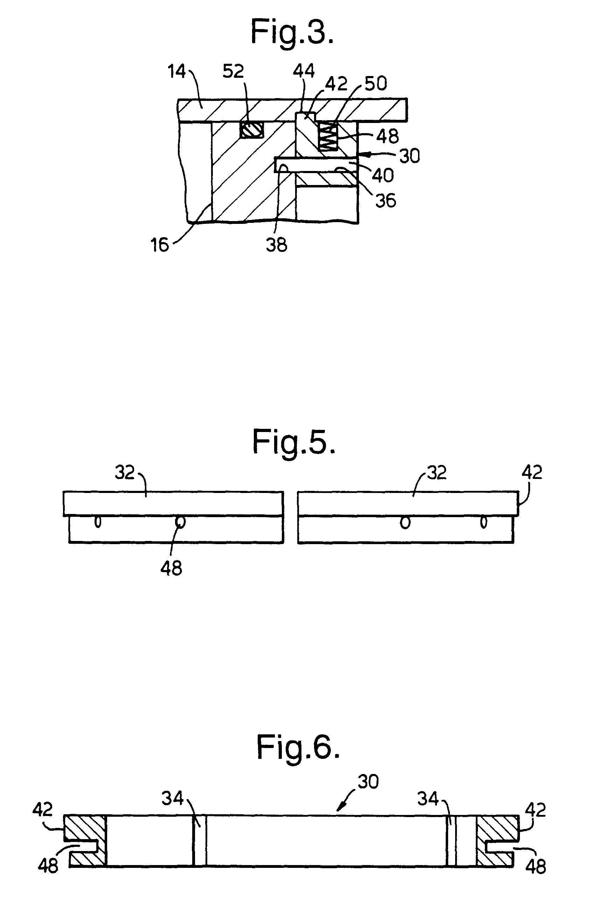

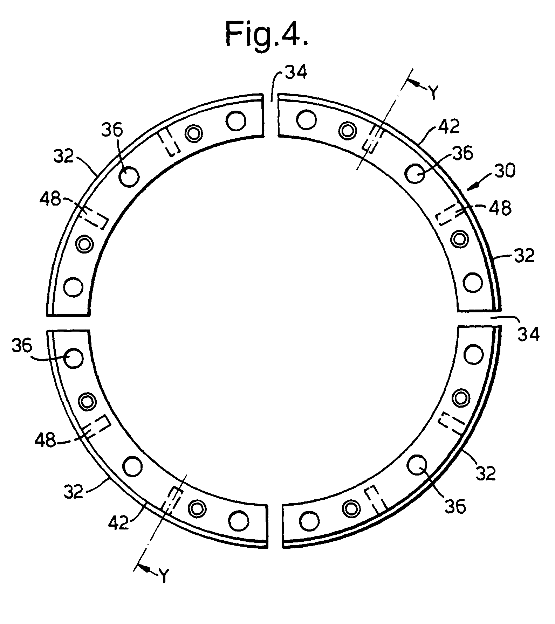

Referring now to Figures 2 to 6 which show an embodiment according to the present invention whereby a casing 14 has a closure comprising a nozzle 16. Under normal conditions, the nozzle 16 is held in place by retaining means indicated in Figure 2 generally at 20 and described in more detail in Figure 3 which shows the area "C" of Figure 2. The nozzle 16 is held in place by a retaining ring 30 which is split into four segments 32 having gaps 34 therebetween. The retaining ring segments 32 have axially directed holes 36 which align with holes 38 formed in the nozzle 16. Locating means comprising pins 40 made of a low melting point alloy which melts at a predetermined temperature are fitted into the holes 36, 38 so as to maintain the retaining ring segments 32 and the nozzle 16 in a predetermined radial relationship. The retaining ring segments 32 are also provided with circumferential flange portions 42 which fit into and co-operate with engagement means, in this case a corresponding circumferential groove 44 in the inner surface of the casing or body portion 14, such that the nozzle 16 is maintained in a predetermined axial position. The ring segments 32 are also provided with radially directed blind recesses 48 to house resilient biasing means such as springs 50 which urge the segments 32 radially inwardly against the locating pins 40. A seal member 52 is provided between the casing 14 and nozzle 16.

In operation and under normal firing conditions of the vehicle 10, the motor burns as intended and the axial thrust of the motor 12 is born by the co-operating flange 42 and groove 44. Even if the pins 40 were to melt under normal operating conditions, the axial thrust of the motor on the flange 42 and groove 44 is very much greater than the radial force exerted by the springs 50 tending towards disengagement of the flange and groove. However, due to the short burn time of the motor, it is unlikely that the pins would melt due to poor thermal conductivity of the nozzle and insufficient time.

In the case where the motor 12 is subjected to unwanted slow extraneous heating, the pins 40 melt at a predetermined temperature such as 90°C, for example, and allow the now unrestrained springs 50 to push the segments 32 radially inwardly so as to disengage the flange 42 from the groove 44. Thus, the nozzle 16 is no longer located in the axial direction. Unwanted ignition of the motor 12 causes the nozzle to be instantly ejected from the casing so preventing any pressure rise and causing the motor 12 to burn at a low rate.

The motor 12 may be ignited by a device as described in our copending patent application, PCT/GB96/00325. Where this is the case, such ignition will be at a temperature no lower than, and more preferably, greater than that at which the pins 40 melt so that there is no opportunity for the motor to begin to burn and generate a high axial force between the flange 42 and groove 44.

It will be apparent to those skilled in the art that the forward closure 18 of the vehicle 10 may be arranged to be ejected in a similar manner to the nozzle 16 if desired.

Alternatively, the segments 32 may be provided with one or more circumferentially directed leaf springs, for example, instead of the coil springs 50.

## Claims

1. A solid fuel propellant motor casing (10) comprising a body portion (14) for containing the propellant, the body portion (14) also including at least one detachable closure portion (16), the closure portion (16) being maintained in position relative to said body portion (14) by retaining means (20), the retaining means (20) being held in position with engagement means (44) on an inner surface of said body portion (14) and located radially with respect to said body portion (14) by locating means (40) against resilient biasing means (50), characterised in that said locating means (40) are responsive to temperature such that said locating means (40) melt at a predetermined temperature allowing said resiliently biased retaining means (20) to move radially inwardly of said body portion (14) and allow said at least one closure portion (16) to be ejected from the casing.

2. A casing according to claim 1 wherein the at least one closure portion is a nozzle portion (16).

3. A casing according to claim 1 wherein the at least one closure portion is a forward portion of a vehicle (18).

4. A casing according to any one preceding claim wherein the locating means are made of a metal or alloy which melts at a predetermined temperature, the metal or alloy being selected from at least one of the group comprising; tin; lead; bismuth; antimony and cadmium.

5. A casing according to any one preceding claim further including additional locating means (42) to locate said closure in an axial direction against the thrust of burning propellant in normal operation.

6. A casing according to claim 5 wherein said additional locating means comprises a co-operating flange (42) on said retaining means (20) and a groove (44) in said motor body.

7. A casing according to any one preceding claim wherein said engagement means (44) on an inner surface of said body portion (14) is constituted by the groove (44) of claim 6.

8. A casing according to either claim 6 or claim 7 wherein said flange (42) and groove (44) are in permanent engagement in normal operation.

9. A casing according to any one preceding claim wherein said retaining means comprises a ring (30) dimensioned to co-operate with the body portion (14).

10. A casing according to claim 9 wherein the ring (30) is split into two or more segments (32).

11. A casing according to any one preceding claim where the locating means (40) comprise one or more of pins, screws, wedges, rivets.

12. A solid propellant propelled vehicle having a casing according to any one of preceding claims 1 to 11.

## Patentansprüche

1. Festbrennstoff-Treibmittelmotorgehäuse (10), bestehend aus einem Körperteil (14) zur Aufnahme des Treibmittels, wobei der Körperteil (14) auch mindestens einen abnehmbaren Verschlußteil (16) aufweist und der Verschlußteil (16) relativ zum Körperteil (14) durch Rückhaltemittel (20) in Position gehalten wird, wobei die Rückhaltemittel (20) mit Eingriffsmitteln (44) an einer Innenfläche des genannten Körperteils (14) in Position gehalten werden und radial mit Bezug auf den Körperteil (14) durch Positioniermittel (40) gegen elastische Vorspannmittel (50) positioniert werden, dadurch gekennzeichnet, daß die Positioniermittel (40) temperaturabhängig sind, derart, daß die Positioniermittel (40) bei einer vorgegebenen Temperatur schmelzen und die elastisch vorgespannten Rückhaltemittel (20) sich dann radial einwärts mit Bezug auf den Körperteil (14) bewegen lassen, so daß mindestens ein Verschlußteil (16) von dem Gehäuse abgeworfen werden kann.

2. Gehäuse nach Anspruch 1, wobei das mindestens eine Verschlußteil ein Düsenteil (16) ist.

3. Gehäuse nach Anspruch 1, wobei das mindestens eine Verschlußteil ein vorderer Teil eines Trägers (18) ist.

4. Gehäuse nach einem der vorhergehenden Ansprüche, wobei die Positioniermittel aus einem Metall oder einer Legierung hergestellt sind, das bzw. die bei der vorgegebenen Temperatur schmilzt, wobei das Metall bzw. die Legierung aus mindestens einem der Zinn, Blei, Wismuth, Antimon und Cadmium umfassenden Gruppe ausgewählt ist.

5. Gehäuse nach einem der vorhergehenden Ansprüche, das weiter zusätzliche Positioniermittel (42) aufweist, um den Deckel in Axialrichtung gegen den Schub abbrennenden Treibmittels im normalen Betrieb zu positionieren.

6. Gehäuse nach Anspruch 5, wobei die zusätzlichen Positioniermittel einen zusammenwirkenden Flansch (42) an den Rückhaltemitteln (20) und eine Nut (44) im Motorkörper umfassen.

7. Gehäuse nach einem der vorhergehenden Ansprüche, wobei die Eingriffsmittel (44) an einer Innenfläche des Körperteils (14) durch die Nut (44) nach Anspruch 6 gebildet sind.

8. Gehäuse nach Anspruch 6 oder 7, wobei der Flansch (42) und die Nut (44) im normalen Betrieb in permanentem Eingriff miteinander stehen.

9. Gehäuse nach einem der vorhergehenden Ansprüche, wobei die Rückhaltemittel einen Ring (30) umfassen, der so dimensioniert ist, daß er mit dem Körperteil (14) zusammenwirkt.

10. Gehäuse nach Anspruch 9, wobei der Ring (30) in zwei oder mehrere Segmente (32) geteilt ist.

11. Gehäuse nach einem der vorhergehenden Ansprüche, wobei die Positioniermittel (40) aus einem oder mehreren Stiften, Schrauben, Keilen, Nieten bestehen.

12. Mit festem Treibmittel angetriebenes Transportmittel mit einem Gehäuse nach einem der vorhergehenden Ansprüche 1 bis 11.

## Revendications

1. Corps de propulseur à combustible de propulsion solide (10) comprenant une partie de fuselage (14) pour contenir l'agent propulsif, la partie de fuselage (14) comprenant également au moins une partie de fermeture amovible (16), la partie de fermeture (16) étant maintenue en position par rapport à ladite partie de fuselage (14) par des moyens de retenue (20), les moyens de retenue (20) étant maintenus en position par des moyens de mise en prise (44) sur une surface intérieure de ladite partie de fuselage (14) et placés de manière radiale par rapport à ladite partie de fuselage (14) par des moyens de positionnement (40) contre des moyens de sollicitation élastiques (50), caractérisé en ce que lesdits moyens de positionnement (40) sont sensibles à la température de telle sorte que lesdits moyens de positionnement (40) fondent à une température prédéterminée permettant auxdits moyens de retenue sollicités de manière élastique (20) de se déplacer radialement vers l'intérieur de ladite partie de fuselage (14) et permettent à ladite au moins une partie de fermeture (16) d'être éjectée dudit corps.

2. Corps selon la revendication 1, dans lequel la au moins une partie de fermeture est une partie de tuyère (16).

3. Corps selon la revendication 1, dans lequel la au moins une partie de fermeture est une partie avant d'un véhicule (18) .

4. Corps selon l'une quelconque des revendications précédentes, dans lequel les moyens de positionnement sont réalisés en un métal ou un alliage qui fond à une température prédéterminée, le métal ou l'alliage étant sélectionné parmi au moins l'un du groupe comprenant : l'étain, le plomb, le bismuth, l'antimoine et le cadmium.

5. Corps selon l'une quelconque des revendications précédentes, comprenant, de plus, des moyens de positionnement supplémentaires (42) afin de positionner ladite fermeture dans une direction axiale contre la poussée de l'agent propulsif en combustion au cours d'un fonctionnement normal.

6. Corps selon la revendication 5, dans lequel lesdits moyens de positionnement supplémentaires comprennent une bride coopérante (42) sur lesdits moyens de retenue (20) et une gorge (44) dans ledit fuselage du propulseur.

7. Corps selon l'une quelconque des revendications précédentes, dans lequel lesdits moyens de mise en prise (44) sur une surface intérieure de ladite partie de fuselage (14) sont constitués par la gorge (44) de la revendication 6.

8. Corps selon la revendication 6 ou la revendication 7, dans lequel ladite bride (42) et ladite gorge (44) sont en prise permanente au cours d'un fonctionnement normal.

9. Corps selon l'une quelconque des revendications précédentes, dans lequel lesdits moyens de retenue comprennent une bague (30) d'une dimension telle qu'elle coopère avec la partie de fuselage (14).

10. Corps selon la revendication 9, dans lequel la bague (30) est divisée en deux segments (32) ou davantage.

11. Corps selon l'une quelconque des revendications précédentes, dans lequel les moyens de positionnement (40) comprennent un(e) ou plusieurs goupilles, vis, coins, rivets.

12. Véhicule propulsé par un agent propulsif solide comportant un corps selon l'une quelconque des revendications précédentes 1 à 11.
